# EUROPEAN PATENT APPLICATION

(11) **EP 0 968 651 A1**
(43) Date of publication of application: **05.01.2000**
(21) Application number: 98305237.4
(22) Date of filing: 01.07.1998
(51) Int. Cl.: A01N 47/02, A01N 43/56

(54) **Pesticidal method and composition**

(71) Applicant: RHONE-POULENC AGRICULTURE LTD., Ongar, Essex CM5 0HW (GB)
(72) Inventor: Lankford, William Timothy, Ongar, Essex, CM5 OHW (GB); Parsons, Richard, Manningtree, Essex, CO11 2NF (GB)
(74) Representative: Bentham, Stephen

(57) **Abstract**

The invention provides a method of protecting plants from weevil attack by using a growing medium containing an arylpyrazole.

## Description

The present invention relates to a new pesticidal method for the control of weevils, e.g. *Otiorynchus sulcatus* and to a new composition.

It is presently known that weevils, such as *Otiorynchus sulcatus* (also known as Black Vine Weevil) are destructive pests in agriculture and horticulture. The insects may inhabit potted plants which are available at commercial horticultural markets. A problem to overcome in the control of these insects in horticultural markets is actually detecting the presence of the larvae of the insects. Although detection of adults may be readily done by observing feeding damage on the leaves, damage by larvae is particularly insidious and difficult to detect because the larvae damage the plants by destroying the roots. Thus by the time damage is detected the plant may not have a reasonable chance to recover after treatment.

An object of the invention is the control of weevils, such as *Otiorynchus sulcatus* and others mentioned hereinafter.

Another object of the invention is the prevention of damage by weevils, such as *Otiorynchus sulcatus,* to plants, e.g. ornamental plants.

Another object of the invention is to provide a new composition for the control of weevils such as *Otiorynchus sulcatus* and others mentioned hereinafter.

These objects are met in whole or in part by the instant invention.

The present invention provides a method of protecting a plant, eg an ornamental plant, a soft fruit plant (e.g. strawberry or raspberry) or pine, from weevils which method comprises applying to a growing medium in which the plant is growing or is to be grown an insecticidally effective amount of a 1-arylpyrazole of formula (I): 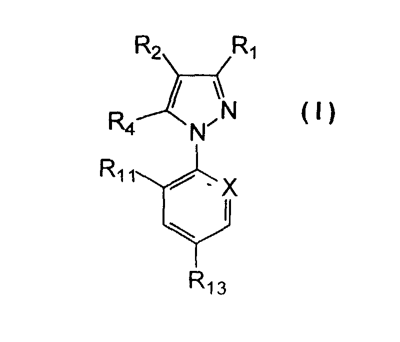 wherein:
R₁ is CN or methyl or a halogen atom;
R₂ is S(O)ₙR₃ or 4,5-dicyanoimidazol-2-yl or haloalkyl;
R₃ is alkyl or haloalkyl;
R₄ is selected from the group consisting of hydrogen, halogen, -NR₅R_{6,}-C(O)OR₇, -S(O)ₘR₇, alkyl, haloalkyl, -OR₈,
   -N=C(R₉)(R₁₀) and -C(O)alkyl;
R₅ and R₆ are independently selected from a hydrogen atom, alkyl, haloalkyl,-C(O)alkyl, -C(O)OR_{7,} -S(O)ᵣCF₃; or R₅ and R₆ form together a divalent alkylene radical which may be interrupted by one or more heteroatoms, preferably selected from oxygen, nitrogen and sulfur;
R₇ is selected from alkyl and haloalkyl;
R₈ is selected from alkyl, haloalkyl and hydrogen;
R₉ is selected from hydrogen and alkyl;
R₁₀ is selected from phenyl and heteroaryl each of which is unsubstituted or substituted by one or more hydroxy, halogen, -O-alkyl, -S-alkyl, cyano, or alkyl or combinations thereof;
X is selected from nitrogen and -C-R₁₂;
R₁₁ and R₁₂ are independently selected from halogen, hydrogen, CN and NO₂;
R₁₃ is selected from halogen, haloalkyl, haloalkoxy,
   -S(O)_{q}CF₃ and -SF₅;
m, n, q, r are independently selected from 0, 1, and 2;
provided that when R₁ is methyl, R₃ is haloalkyl, R₄ is NH₂, R₁₁ is Cl, R₁₃ is CF₃, and X is N and provided that when R₂ is 4,5-dicyanoimidazol-2-yl, R₄ is Cl, R₁₁ is Cl, R₁₃ is CF₃, and X is =C-Cl.

The alkyl and alkoxy groups and moieties thereof of the formula (I) are preferably lower alkyl and alkoxy groups, that is, groups having one to six carbon atoms. The haloalkyl and haloalkoxy groups likewise preferably have one to four carbon atoms. The haloalkyl and haloalkoxy groups can bear one or more halogen atoms; preferred groups of this type include -CF₃ and -OCF₃. It shall be understood that the ring formed by the divalent alkylene radical represented by R₅ and R₆ and including the nitrogen atom to which R₅ and R₆ are attached is generally a 5, 6, or 7-membered ring. When R₁₀ is heteroaryl, it is preferably pyridyl, most preferably 2-pyridyl. It will be understood that the 1-arylpyrazoles of formula (I) include enantiomers and/or diastereomers thereof and mixtures thereof.

A preferred group of 1-arylpyrazoles for use in the present invention are those of formula (I) with one or more of the following features wherein:
R₁ is CN;
R₄ is -NR₅R₆;
R₅ and R₆ are independently selected from the hydrogen atom, alkyl, haloalkyl, C(O)alkyl, C(O)OR₇;
X is C-R₁₂; or
R₁₃ is selected from a halogen atom, haloalkyl, haloalkoxy, and -SF₅.

Another preferred group of 1-arylpyrazoles of formula (I) for use in the present invention is that wherein:
R₁ is CN;
R₃ is a haloalkyl radical;
R₄ is NH₂;
X is C-R₁₂;
R₁₁ and R₁₂ represent, independently of one another, a halogen atom; and
R₁₃ is a haloalkyl radical.

A most preferred compound is 5-amino-1-(2,6-dichloro 4-trifluoromethyl phenyl) 4-trifluoromethylsulfinyl-3 -cyanopyrazole, hereafter designated as compound (A).

Compounds of formula (I) may be prepared according to known processes, for example as described in International Patent Publications WO 87/3781, 93/6089, and 94/21606 as well as in European Patent Applications 295117, 403300, 385809 or 679650, German Patent Publication 19511269 and United States Patents 5232940 and 5236938 or other process according to the knowledge of a man skilled in the art of chemical synthesis, which is deemed to include Chemical Abstracts and the literature referred to therein. Compositions comprising the compounds of formula (I) may also be prepared according to the teaching of the same prior art or similar publications.

The weevils may be of the Otiorynchus or Hylobius family, e.g. Otiorynchus sulcatus, Otiorynchus ovatus (European strawberry) weevil, Otiorynchus singularis which attack soft fruit plants (e.g. strawberry and raspberry) and Hylobius abietis (pine weevil).

By the term "growing medium" is meant a substance in which, for example, the plant or the seed from which it grows may germinate and develop or into which it may be translated. Generally growing medium comprises compost, peat or potting soil. To facilitate even distribution of the 1-arylpyrazole in the growing medium, it may be applied to one or more components e.g. sand, perlite or water-retaining granules of the growing medium before that component is incorporated into the growing medium. The content of 1-arylpyrazole in the treated component may be adjusted to provide the desired final concentration after mixing all the components of the growing medium. Such treated components also constitute a feature of the invention.

The 1-arylpyrazole may be used in conjunction with other active ingredients, for example a plant feed or plant growth regulator. Compositions comprising a plant feed or plant growth regulator, a 1-arylpyrazole of general formula (I) and, optionally, a carrier and/or a surface active agent also constitute a feature of the invention.

The invention provides a growing medium for a plant which comprises an amount of a 1-arylpyrazole of formula (I) effective to protect the plant or the seed from which it grows from weevil attack.
A growing medium in which the 1-arylpyrazole is substantially evenly or uniformly distributed throughout the medium is preferred. Preferably the 1-arylpyrazole is present on granules which granules are substantially evenly or uniformly distributed throughout the growing medium. The invention also provides a growing medium comprising 1-arylpyrazole as described herein which medium is packaged , for example in plastics bags, as seed compost, potting compost or general purpose compost. The compost may be, for example soil-based or peat-based. The plastics bags may simply contain the compost, quantities of which can be used as required or they may be in the form of'grow bags' in which plants may be grown.

Generally the amount of the 1-arylpyrazole is from 0.01 g/m³ to 20 g/m³, e.g. 0.01 g/m³ to 10 g/m³, of 1-arylpyrazole per volume of growing medium, preferably from 0.2 g/m³ to 5 g/m³, more preferably from 0.25 to 1 g/m³.

The method of the invention is preferably applied to plants grown in containers, for example pots, nets or other flexible material which contains the growing medium.

The application of the 1-arylpyrazole is generally effected by a suitable means known to those skilled in the art. It is generally preferred to apply the 1-arylpyrazole as a particulate solid composition or a liquid composition to the growing medium. It is more preferable to apply the 1-arylpyrazole as a particulate solid composition in order to minimize the effective amount and more evenly distribute the active ingredient in the growing medium.

The 1-arylpyrazole is preferably incorporated in the growing medium as granules. The granules generally comprise from 0.02% to 2% by weight of 1-arylpyrazole, preferably 0.05 to 0.5%, most preferably about 0.1% of arylpyrazole. The 1-arylpyrazole is preferably used in the form of granules containing 0.1% by weight of 1-arylpyrazole, using from 0.5 to 2.5kg, preferably from 1 to 2kg, most preferably 1kg of granules per cubic metre of growing medium. The invention accordingly provides a growing medium which comprises granules which granules generally comprise from 0.02% to 2% by weight of 1-arylpyrazole. The granules are generally substantially evenly distributed throughout the growing medium.

The particle size of the granules is generally 100-1000µm, preferably 200-900µm.

The bulk density is generally 30-60 lb/ft³ (480-960kg/m³), preferably 40-50 lb/ft³ (640-800kg/m³), most preferably 42-45lb/ft³ (670-720kg/m³). The granules may be, for example, the commercial product Chipco Choice 0.1G formulated with a bulk density 42-45lb/ft³ (670-720 kg/m³). A preferred particle size range is from 150 to 1000µm, preferably with >95% of the granules from 355 to 856µm more preferably with 65% >500µm.

The granules may contain a marker, for example a colouring agent, to facilitate monitoring of their distribution in the growing medium during mixing.

The 1-arylpyrazole may also be incorporated into the growing medium by, for example, spraying an aqueous dispersion of the 1-arylpyrazole onto the growing medium during its manufacture or processing.

In general the method of the instant invention is used preventatively: that is, the application of the 1-arylpyrazole is used to prevent or reduce attack by weevils such as *Otiorynchus sulcatus* on a plant. However, the invention may also be used curatively in that a planting medium infested with weevils such as *Otiorynchus sulcatus* or others mentioned above may be treated to kill a substantial majority of the insects after the plant has been affected. Generally in a curative treatment, it is preferred to apply the 1-arylpyrazole as a liquid composition to penetrate the planting medium quickly.

When a liquid composition is used the concentration of 1-arylpyrazole is generally from 0.2 grams per 100 litres to 5 grams per 100 litres of liquid composition, for example 0.5 to 2 grams per 100 litres, for example about 1 gram per 100 litres.

The method of the invention may be used to provide long-term protection for plants, ornamental plants, from weevils such as *Otiorynchus sulcatus.* Generally, the method of the invention provides protection of from 0.1 years to 5 years, preferably from 0.3 years to 3 years, most preferably from 0.5 years to 2 years.

The following Examples illustrate the invention:

### Example 1:

In a twenty-replicate test, Compound A was incorporated in compost by mixing a 2% w/w granule with the compost *(Klasmann Substrat* 2 (Peat based) ) using a small mechanical mixer. Plants of *Thuya plicata* Atrovirens were potted in the compost and allowed to grow for two months and then about 15 eggs of *Otiorynchus sulcatus* were added to the soil and covered with a small layer of compost. As a comparison, some compost was untreated and other compost was treated with the standard chlorpyrifos in the form of the commercial product suSCon Green®. After 27 days the soil was re-infested with 15 more eggs. The plant pots were enclosed such that the plants were exposed to light and the adult beetles which emerged could not escape.

Of the twenty replicates of each test, five were assessed after 6 months and fifteen were assessed after 18 months for numbers of larvae and adults. After 6 months the following results were observed:

| Compound | Dose g/m³ | Total # larvae | Number per pot | % Control |
|---|---|---|---|---|
| Untreated | 0 | 31 | 3.1 | 0 |
| A | 2.5 | 0 | 0 | 100 |
| A | 5 | 0 | 0 | 100 |
| A | 7.5 | 0 | 0 | 100 |
| A | 15 | 0 | 0 | 100 |
| Chlorpyrifos | 75 | 4 | 0.8 | 87 |

The following results were obtained after 18 months:

| Compound | Dose g/m³ | Total Dead Plants | % Survival of Plants | Total # larvae | Number per pot | % Control |
|---|---|---|---|---|---|---|
| Untreated | 0 | 7 | 72 | 51 | 3.1 | 0 |
| A | 2.5 | 0 | 100 | 0 | 0 | 100 |
| A | 5 | 0 | 100 | 0 | 0 | 100 |
| A | 7.5 | 0 | 100 | 0 | 0 | 100 |
| A | 15 | 0 | 100 | 0 | 0 | 100 |
| Chlorpyrifos | 75 | 0 | 100 | 47 | 3.1 | 0 |

### Example 2

In 20-replicate tests, *Fuchsia triphylla* hybrid cv. Koralle was infested with 15 eggs per pot of vine weevil. Compound A in the form of an 80% water dispersible granule (Regent 800 WG) was suspended in water and added to each pot at the indicated rate per surface area of the pot at various dilutions. After 6 months, the trials were assessed. Compound A protected the plants substantially better than the commercial standard fonofos in a curative treatment.

| **Drench Treatments** | | | | | | |
|---|---|---|---|---|---|---|
| T rt. No. | | Dose mg m⁻² | in litre | Total no. of larvae | Number per pot | **Control** |
| 1 | Untreated Control | | | 44 | **2.2** | |
| | | | | | | |
| 2 | *REGENT 800WG* | 1.25 | 5 | 25 | 1.25 | **43%** |
| 3 | *REGENT 800WG* | 1.25 | 10 | 30 | 1.5 | **32%** |
| 4 | *REGENT 800WG* | 1.25 | 20 | 12 | 0.6 | **73%** |
| 5 | *REGENT 800WG* | 2.5 | 5 | 10 | 0.5 | **77%** |
| 6 | *REGENT 800WG* | 2.5 | 10 | 18 | 0.9 | **59%** |
| 7 | *REGENT 800WG* | 2.5 | 20 | 10 | 0.5 | **77%** |
| 8 | *REGENT 800WG* | 5 | 5 | 8 | 0.4 | **82%** |
| 9 | *REGENT 800WG* | 5 | 10 | 11 | 0.55 | **75%** |
| 10 | *REGENT 800WG* | 5 | 20 | 15 | 0.75 | **66%** |
| 11 | *REGENT 800WG* | 10 | 10 | 5 | 0.25 | **89%** |
| | | | | | | |
| 12 | *Cudgel* **ml** | 2.5 | 10 | 32 | 1.6 | **27%** |
| | (*fonofos*) | | | | | |

## Claims

1. A method of protecting a plant from weevil attack which method comprises applying to a growing medium in which the plant is growing or is to be grown an insecticidally effective amount of a 1-arylpyrazole of formula (I): 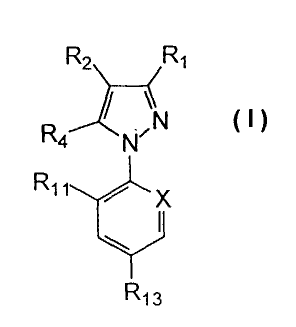 wherein:
R₁ is CN or methyl or a halogen atom;
R₂ is S(O)ₙR₃ or 4,5-dicyanoimidazol-2-yl or haloalkyl;
R₃ is alkyl or haloalkyl;
R₄ is selected from the group consisting of hydrogen, halogen, -NR₅R_{6,}-C(O)OR₇, -S(O)ₘR₇, alkyl, haloalkyl, -OR₈,
-N=C(R₉)(R₁₀) and -C(O)alkyl;
R₅ and R₆ are independently selected from a hydrogen atom, alkyl, haloalkyl,-C(O)alkyl, -C(O)OR_{7,} -S(O)ᵣCF₃; or R₅ and R₆ form together a divalent alkylene radical which may be interrupted by one or more heteroatoms, preferably selected from oxygen, nitrogen and sulfur;
R₇ is selected from alkyl and haloalkyl;
R₈ is selected from alkyl, haloalkyl and hydrogen;
R₉ is selected from hydrogen and alkyl;
R₁₀ is selected from phenyl and heteroaryl each of which is unsubstituted or substituted by one or more hydroxy, halogen, -O-alkyl, -S-alkyl, cyano, or alkyl or combinations thereof;
X is selected from nitrogen and -C-R₁₂;
R₁₁ and R₁₂ are independently selected from halogen, hydrogen, CN and NO₂;
R₁₃ is selected from halogen, haloalkyl, haloalkoxy,
-S(O)_{q}CF₃ and -SF₅;
m, n, q, r are independently selected from 0, 1, and 2;
provided that when R₁ is methyl, R₃ is haloalkyl, R₄ is NH₂, R₁₁ is Cl, R₁₃ is CF₃, and X is N and provided that when R₂ is 4,5-dicyanoimidazol-2-yl, R₄ is Cl, R₁₁ is Cl, R₁₃ is CF₃, and X is =C-CI.

2. A method according to claim 1 wherein the weevil is of the Otiorynchus or Hylobius family.

3. A method according to claim 1 or 2 wherein the weevil is Otiorynchus sulcatus, ovatus or singularis, or Hylobius abietis.

4. A method according to Claim 1,2 or 3 wherein the 1-arylpyrazole is applied at from 0.01 g/m³ to 10 g/m³ of active ingredient per volume of growing medium.

5. A method according to any one of the preceding claims wherein the 1-arylpyrazole is applied at from 0.2 g/m³ to 5 g/m³ of active ingredient per volume of growing medium.

6. A method according to any one of the preceding claims wherein the growing medium comprises compost, peat or potting soil.

7. A method according to any one of the preceding claims wherein the 1-arylpyrazole is applied as a particulate solid composition to the growing medium.

8. A method according to any one of claims 1 to 6 wherein the 1-arylpyrazole is applied as a liquid composition to the growing medium.

9. A growing medium for a plant which comprises an amount of a 1-arylpyrazole of formula (I) as defined in claim 1
effective to protect the plant or the seed from which it grows from weevil attack.

10. A growing medium according to Claim 9 which comprises from 0.01 g/m³ to 10 g/m³ of the 1 arylpyrazole to the volume of growing medium.
